# EUROPÄISCHE PATENTSCHRIFT

(11) **EP 3 867 022 B1**
(45) Veröffentlichungstag und Bekanntmachung des Hinweises auf die Patenterteilung: **27.07.2022**
(21) Anmeldenummer: 20700644.6
(22) Anmeldetag: 07.01.2020
(51) Int. Cl.: B25J 9/16

(54) **VERFAHREN ZUM AUTOMATISCHEN ANSTEUERN DER BEWEGUNG WENIGSTENS EINES GELENKS EINES ROBOTERARMS, ROBOTERARM UND COMPUTERPROGRAMMPRODUKT**
METHOD FOR AUTOMATICALLY CONTROLLING THE MOVEMENT OF AT LEAST ONE JOINT OF A ROBOTIC ARM, ROBOTIC ARM AND COMPUTER PROGRAM PRODUCT
PROCÉDÉ DE COMMANDE AUTOMATIQUE DU DÉPLACEMENT D'AU MOINS UNE ARTICULATION D'UN BRAS ROBOTISÉ, BRAS ROBOTISÉ ET PRODUIT PROGRAMME INFORMATIQUE

(43) Veröffentlichungstag der Anmeldung: 25.08.2021
(73) Patentinhaber: KUKA Deutschland GmbH, 86165 Augsburg (DE)
(72) Erfinder: KURZE, Matthias, 85221 Dachau (DE)
(74) Vertreter: Oelke, Jochen
(86) Internationale Anmeldenummer: PCT/EP2020/050189
(87) Internationale Veröffentlichungsnummer: WO 2021/139876

(56) Entgegenhaltungen:
- EP-A1- 3 287 244
- Matthias Kurze: "Modellbasierte Regelung von Robotern mit elastischen Gelenken ohne abtriebsseitige Sensorik", Hon.-Prof. Dr.-Ing, 16. Juni 2008 (2008-06-16), XP055217503, Gefunden im Internet: URL:http://nbn-resolving.de/urn/resolver.p l?urn:nbn:de:bvb:91-diss-20080131-645801-1 -9 [gefunden am 2015-10-01]
- LIAO YUSHENG ET AL: "Modeling of Torque Ripple for Integrated Robotic Joint", 2. August 2019 (2019-08-02), ADVANCES IN DATABASES AND INFORMATION SYSTEMS; [LECTURE NOTES IN COMPUTER SCIENCE; LECT.NOTES COMPUTER], SPRINGER INTERNATIONAL PUBLISHING, CHAM, PAGE(S) 740 - 750, XP047515769, ISBN: 978-3-319-10403-4 [gefunden am 2019-08-02] Seite 740
- SUMEGA MARTIN ET AL: "Adaptive algorithm to reduce acoustic noise and torque ripple in low-cost PM motors", 2019 INTERNATIONAL AEGEAN CONFERENCE ON ELECTRICAL MACHINES AND POWER ELECTRONICS (ACEMP) & 2019 INTERNATIONAL CONFERENCE ON OPTIMIZATION OF ELECTRICAL AND ELECTRONIC EQUIPMENT (OPTIM), IEEE, 27. August 2019 (2019-08-27), Seiten 100-107, XP033721857, DOI: 10.1109/ACEMP-OPTIM44294.2019.9007153 [gefunden am 2020-02-21]

## Beschreibung

Die Erfindung betrifft ein Verfahren zum automatischen Ansteuern der Bewegung wenigstens eines Gelenks eines Roboterarms, wobei der Roboterarm mehrere Glieder aufweist, die durch die Bewegungen der Gelenke des Roboterarms gegeneinander verstellbar sind, und das wenigstens eine Gelenk ein Getriebe umfasst, welches ausgebildet ist, das wenigstens eine Gelenk zu verstellen und zwar durch automatisches Ansteuern eines an das Getriebe angeschlossenen elektrischen Motors des Roboterarms. Die Erfindung betrifft außerdem einen zugehörigen Roboter und ein zugehöriges Computerprogrammprodukt.

Die EP 2 628 575 B1 offenbart ein Verfahren zum Ermitteln eines auf ein Glied eines Roboterarms wirkenden Drehmoments, wobei der Roboterarm mehrere, hintereinander angeordnete Glieder aufweist, von denen ein erstes Glied relativ zu einem zweiten Glied der Glieder bezüglich einer Drehachse drehbar gelagert ist und mittels eines relativ zum zweiten Glied ortsfesten elektrischen Motors und eines dem Motor nachgeschalteten Getriebes bezüglich der Drehachse drehbar ist. Das dortige Verfahren umfasst die Schritte des Ermittelns des dem Motor zugewandten antriebsseitigen Drehwinkels und des dem Motor abgewandten abtriebsseitigen Drehwinkels des Getriebes, und des Ermittelns des auf das erste Glied wirkenden Drehmoments aufgrund der ermittelten antriebsseitigen und abtriebsseitigen Drehwinkeln des Getriebes und basierend auf einem mathematischen Modell des Getriebes, welches insbesondere elastische Eigenschaften des Getriebes berücksichtigt.

Die Dissertation an der Technischen Universität München von Matthias Kurze vom 16.06.2008 mit Titel "Modellbasierte Regelung von Robotern mit elastischen Gelenken ohne abtriebsseitige Sensorik" offenbart ein Regelungskonzept für Roboter mit elastischen Gelenken. Die Regelung kann ohne den Einsatz zusätzlicher Sensorik die Dynamik von Robotern hinsichtlich Bahngenauigkeit und Störverhalten verbessern. Das modellbasiertes Regelungskonzept ermöglicht eine Entkopplung von Regelkreisen sowie eine Kompensation betriebszustandsabhängiger Nichtlinearitäten. Dazu werden mit Hilfe nichtlinearen Beobachters die nicht messbaren Zustände geschätzt. Um eine korrekte Zustandsschätzung zu gewährleisten, werden die vom Betriebszustand abhängige Reibung mit Hilfe von Neuronalen Netzen online identifiziert und zu kompensiert. Ferner wird die Implementierung der Regelung an einem Standardindustrieroboter offenbart.

Eine Aufgabe der Erfindung ist es, ein Verfahren zum automatischen Ansteuern der Bewegung wenigstens eines Gelenks eines Roboterarms zu schaffen, durch das Momentenrippel zumindest teilweise oder nahezu vollständig kompensiert werden können.

Die Aufgabe wird gelöst durch ein Verfahren zum automatischen Ansteuern der Bewegung wenigstens eines Gelenks eines Roboterarms, wobei der Roboterarm mehrere Glieder aufweist, die durch die Bewegungen der Gelenke des Roboterarms gegeneinander verstellbar sind, und das wenigstens eine Gelenk ein Getriebe umfasst, welches ausgebildet ist, das wenigstens eine Gelenk zu verstellen und zwar durch automatisches Ansteuern eines an das Getriebe angeschlossenen elektrischen Motors des Roboterarms, aufweisend die Schritte:
- Erfassen der Motorpositionen, der Motorgeschwindigkeiten und/oder der Motorbeschleunigungen des elektrischen Motors zu bestimmten Zeitpunkten im zeitlichen Verlauf,
- Messen des jeweiligen Gelenkmoments zu den bestimmten Zeitpunkten im zeitlichen Verlauf,
- Berechnen der jeweiligen modellbasierten Gelenkmomente zu den bestimmten Zeitpunkten im zeitlichen Verlauf mittels der inversen Dynamik eines dynamischen Modells des Roboterarms aus den erfassten Motorpositionen, Motorgeschwindigkeiten und/oder Motorbeschleunigungen,
- Bestimmen von geschätzten Momentenrippeln in Form einer periodischen Funktion mit der Amplitude und der Phase in Abhängigkeit der Motorpositionen, wobei
- die Amplitude und die Phase der periodischen Funktion mittels eines Optimierungsverfahrens angepasst werden, indem
- als ein Residuum für die Optimierung die Abweichungen zwischen den jeweils gemessenen Gelenkmomenten und der jeweils berechneten modellbasierten Gelenkmomente verwendet wird, und
- Anpassen der zu kommandierenden Sollwerte für die Motorpositionen, der Motorgeschwindigkeiten und/oder der Motorbeschleunigungen, indem aus den geschätzten Momentenrippeln und einer Gelenk-Torsionssteifigkeit des wenigstens einen Gelenks die aufgrund der Momentenrippel auftretenden Motorpositionsabweichungen bestimmt und zur Anpassung der zu kommandierenden Sollwerte herangezogen werden.

Das erfindungsgemäße Verfahren wird repräsentativ an einem einzelnen Gelenk des Roboterarms beschrieben, wobei das Gelenk ein Glied des Roboterarms mit einem anderen, benachbarten Glied des Roboterarms gegeneinander verstellbar verbindet. Um das Gelenk automatisch angetrieben verstellen zu können, weist das Gelenk einen Antrieb auf, der einen elektrischen Motor und ein zwischen dem Motor und dem Gelenk im Antriebsstrang zwischengeschaltetes Getriebe aufweist. Das Getriebe übersetzt die Drehzahl einer Motorwelle des elektrischen Motors in eine Drehzahl des Gelenks. Dazu weist das Getriebe ein Getriebeeingangsglied auf, das mit der Motorwelle des Motors verbunden ist und ein Getriebeausgangsglied auf, das mit dem Gelenk bzw. mit einem das Gelenk mitbildenden Glied des Roboterarms verbunden ist. Das für ein Gelenk des Roboterarms Beschriebene kann auch für ein oder mehrere weitere Gelenke des Roboterarms gelten. Dies bedeutet, dass wahlweise ein oder mehrere Gelenke des Roboterarms erfindungsgemäß betrieben sein können.

Die erfindungsgemäß zumindest teilweise oder nahezu vollständig zu kompensierenden Momentenrippel können ihre Ursache vorrangig in der Konstruktion des Getriebes haben. Die Momentenrippel können jedoch gegebenenfalls andere Ursachen haben. Für die erfindungsgemäße Kompensation von Momentenrippeln spielt die Art der verursachenden Komponente jedoch keine Rolle, solange die verursachten Momentenrippel in Abhängigkeit der Drehzahl des Motors periodisch auftreten.

Das Erfassen der Motorpositionen, der Motorgeschwindigkeiten und/oder der Motorbeschleunigungen des elektrischen Motors zu bestimmten Zeitpunkten im zeitlichen Verlauf kann entweder mittels an sich bekannter Motorpositionssensoren oder sensorlos erfolgen. Der Motorpositionssensor dient der Erfassung der momentanen Drehwinkellage der Motorwelle des Motors. Der Motorpositionssensor wird u.a. auch als Drehgeber bezeichnet. Aus jeweils zwei oder mehr zu verschiedenen Zeitpunkten erfassten Drehwinkellagen der Motorwelle des Motors kann auch die Drehgeschwindigkeit und/oder die Drehbeschleunigung der Motorwelle des Motors abgeleitet und insofern bestimmt werden. Als ein Motorpositionssensor kann beispielsweise ein Resolver, ein Inkrementalgeber, aber auch ein Absolutwertgeber herangezogen werden.

In der sensorlosen Ausführungsvariante kann die Drehzahl des Motors aus der vorherrschenden Motorspannung des Motors bestimmt werden. In Motoren, wie insbesondere Servomotoren ist bekanntlich die Motorspannung, d.h. die elektrische Spannung in den Wicklungen proportional zur Drehzahl der Motorwelle des Motors. Die Motorspannung des Motors kann insoweit direkt aus einem Schaltkreis, an den beispielsweise eine Wechselrichterschaltung eines Frequenzumrichters angeschlossen ist, elektrisch abgegriffen werden. Folglich sind in dieser sensorlosen Ausführungsvariante keine separaten Sensorbauteile notwendig.

Das Messen des jeweiligen Gelenkmoments zu den bestimmten Zeitpunkten im zeitlichen Verlauf kann durch einen oder mehrere Kraft-/Momentsensoren erfolgen. Der jeweilige Kraft-/Momentsensor kann das über den Antriebsstrang zwischen Motor und Abtriebsglied übertragene Drehmoment erfassen. Die als solches bekannten Kraft-/Momentsensoren können beispielsweise Dehnmesstreifen (DMS) umfassen, welche eine kraft-/ momentbedingte Verformung auf der Oberfläche eines Bauteils im Antriebsstrang in eine elektrisch messbare Widerstandsänderung umsetzen.

Sowohl das Erfassen der Motorpositionen, der Motorgeschwindigkeiten und/oder der Motorbeschleunigungen des elektrischen Motors, als auch das Messen des jeweiligen Gelenkmoments kann durch eine Steuervorrichtung elektrisch, insbesondere in vorgegebenen Zeitschritten erfolgen und automatisch durchgeführt werden.

Das erfindungsgemäße Verfahren umfasst ein dynamisches Modell des Roboterarms. Insoweit kann die Steuervorrichtung eingerichtet sein, das dynamische Modell aufzuweisen. Das dynamische Modell kann unter anderem auf Grundlage von Eingangsgrößen, wie den Motorpositionen, den Motorgeschwindigkeiten und/oder den Motorbeschleunigungen der elektrischen Motoren bzw. der Gelenke, zu bestimmten Zeitpunkten im zeitlichen Verlauf an den Gelenken des Roboterarms, die jeweils voraussichtlich auftretenden Drehmomente in den jeweiligen Gelenken, die modellbasierten Gelenkmomente, rechnerisch automatisch bestimmen. In dem dynamischen Modell sind jedoch die zu kompensierenden Momentenrippel nicht modelliert.

So kann erfindungsgemäß das Berechnen der jeweiligen modellbasierten Gelenkmomente zu den bestimmten Zeitpunkten im zeitlichen Verlauf mittels der inversen Dynamik eines dynamischen Modells des Roboterarms aus den erfassten Motorpositionen, Motorgeschwindigkeiten und/oder Motorbeschleunigungen durchgeführt werden.

Das Bestimmen von geschätzten Momentenrippeln in Form einer periodischen Funktion mit der Amplitude und der Phase in Abhängigkeit der Motorpositionen kann durch einen Vergleich der tatsächlich am jeweiligen Gelenk gemessenen Gelenkmomente mit den aus dem dynamischen Modell über die inverse Dynamik rechnerisch bestimmten modellbasierten Gelenkmomente durchgeführt werden. Durch einen solchen Vergleich kann ein Residuum bestimmt werden, welches durch ein Optimierungsverfahren minimiert wird. Mittels des Optimierungsverfahrens werden die Amplitude und die Phase der periodischen Funktion, welche eine Näherung der Momentenrippel darstellt, approximiert.

Auf Basis der approximierten periodischen Funktion der geschätzten Momentenrippel erfolgt dann ein Anpassen der zu kommandierenden Sollwerte für die Motorpositionen, der Motorgeschwindigkeiten und/oder der Motorbeschleunigungen, indem aus den geschätzten Momentenrippeln und einer Gelenk-Torsionssteifigkeit des wenigstens einen Gelenks die aufgrund der Momentenrippel auftretenden Motorpositionsabweichungen bestimmt und zur Anpassung der zu kommandierenden Sollwerte herangezogen werden.

Bei angetriebenen Gelenken eines Roboterarms, insbesondere mit Gelenkantrieben, die Getriebe, wie beispielsweise Spannungswellengetriebe (Harmonic-Drive-Getriebe) aufweisen, kann mitunter ein unruhiges Laufverhalten beobachtet werden. Ursache hierfür kann beispielsweise eine nicht konstante Übersetzung sein, so dass sich eine Übertragungsungenauigkeit ergibt. Dieser Übertragungsfehler kann sich als periodische Schwankung äußern. Ursache für eine nicht ideale Übersetzung können beispielsweise Abweichungen an den Getriebebauteilen vom geometrischen Ideal sein, als auch Fehler in der Montage sein. Ein unruhiges Laufverhalten kann einerseits einen höheren Verschleiß zur Folge haben und andererseits zu Qualitätseinbußen bei den auszuführenden Bewegungen des Roboterarms führen. Insbesondere bei langsam durchfahrenen Bahnen, bei denen der Roboterarm möglichst exakt einer Trajektorie folgen soll, können sich unruhig laufende Gelenke negativ auf die Bahntreue auswirken.

Aufgrund einer niedrigen Geschwindigkeit kann die Frequenz von Momentenrippeln im Antriebsstrang, insbesondere im Getriebe, wie oben beschrieben, unter Umständen mit der Eigenfrequenz der Mechanik des Roboterarms übereinstimmen, so dass der Roboterarm aufgrund einer dann entstehenden Momentenwelligkeit stark angeregt wird und anfängt zu schwingen, was sich in einem Zittern des Roboterarms bemerkbar machen kann.

Das Problem durch eine genauere Fertigung der Bauteile oder durch eine verbesserte Montage lösen zu wollen, wäre zumindest sehr kostenintensiv. Wünschenswert ist es daher, diese periodischen Schwankungen durch steuerungstechnische Maßnahmen bzw. regelungstechnische Maßnahmen zu minimieren. Dazu könnten beispielsweise die Schwankungen in Abhängigkeit vom Motorwinkel einmalig erfasst werden und als Kompensationsdatensatz hinterlegt werden. Die Sollwerte aus der Bahnplanung könnten dann in der Regelung mit diesen Kompensationsdaten laufend überlagert werden, so dass die resultierende Bewegung des jeweiligen Motors im jeweiligen Gelenk des Roboterarms die unerwünschten Schwankungen im Getriebe gerade kompensiert. Nachteilig bei diesem Ansatz ist jedoch der erhöhte Aufwand bei der Inbetriebnahme, da für jedes Gelenk entsprechende Kompensationsdaten messtechnisch ermittelt und hinterlegt werden müssten. Weiterhin kann es gegebenenfalls passieren, dass sich die Eigenschaften des Getriebes mit der Zeit ändern, beispielsweise aufgrund Verschleiß, so dass eine Kompensation nicht mehr zufriedenstellend funktioniert oder sogar das Verhalten verschlechtert wird. Es müssten dann aufwändig erneute Kompensationsdaten messtechnisch ermittelt und hinterlegt werden.

Als ein möglicher zweiter Ansatz könnte eine Online-Kompensation d.h. eine während der Bewegung des betreffenden Gelenks vorgenommene Erfassung, beispielsweise mit einem zusätzlichen abtriebsseitigen Geber erfolgen, bei dem alle Schwankungen in Echtzeit soweit wie möglich und unabhängig von ihren Ursachen kompensiert werden. Ein Vorteil wäre hierbei, dass die sich im Betrieb ändernden Getriebeeigenschaften messtechnisch erfasst werden könnten und somit eine laufende Verbesserung erreicht werden könnte. Nachteilig daran ist, dass keinerlei Vorwissen für die Kompensation verwendet wird und somit die resultierende Kompensationsgüte nicht optimal ist, da die Kompensation immer erst reaktiv, also verspätet erfolgt.

Mit dem erfindungsgemäßen Verfahren kann die Laufruhe in Gelenken eines Roboterarms, insbesondere mit Getrieben, wie Spannungswellengetrieben (Harmonic-Drive-Getrieben) durch steuerungstechnische bzw. regelungstechnische Maßnahmen erhöht werden. Weiterhin soll es aus Kostengründen nicht erforderlich sein, bei der Inbetriebnahme gezielt Identifikationen oder Messfahrten durchführen zu müssen, um im laufenden Betrieb eine Verbesserung zu erzielen.

Das erfindungsgemäße Verfahren ist geeignet von einer Steuervorrichtung in Echtzeit ausgeführt zu werden. Die Steuervorrichtung kann dazu ausgebildet und eingerichtet sein, das erfindungsgemäße Verfahren in Echtzeit auszuführen, d.h. eine Kompensation von Momentenrippeln mit den Schritten des erfindungsgemäßen Verfahrens zuverlässig jeweils innerhalb einer vorbestimmten Zeitspanne, wie beispielsweise innerhalb eines Interpolationstaktes einer Robotersteuerung durchführen zu können.

Eine weitere Anforderung ist es, bei sich ändernden Getriebeeigenschaften weiterhin eine zufriedenstellende Laufruhe zu gewährleisten. Daher soll die Kompensation erfindungsgemäß in Abhängigkeit von Messwerten erfolgen, um eine Adaption an sich zeitlich ändernde Systemeigenschaften zu erreichen. Um eine gute Kompensationsgüte zu erreichen, soll zudem Vorwissen in die Kompensationsmethode einfließen, das heißt insbesondere die Periodizität der Momentenwelligkeit in Abhängigkeit der Motorposition berücksichtigt werden. Die Erhöhung der Laufruhe soll weiterhin insbesondere bei niedrigen Gelenkgeschwindigkeiten erreicht werden.

Die Momentenrippel werden erfindungsgemäß als periodische Funktion in Abhängigkeit der Motorposition modelliert. Die Amplitude und die Phase werden mittels Optimierung im laufenden Betrieb ermittelt. Dieses Vorgehen kann im Rahmen einer Approximation periodischer Funktionen mit Hilfe eines harmonisch aktivierten Künstlichen Neuronalen Netzes erfolgen.

Als Residuum für die Optimierung wird die Abweichung zwischen modellbasiert berechnetem Gelenkmoment und dem gemessenen Gelenkmoment verwendet. Das modellbasiert berechnete Gelenkmoment wird hierbei mit Hilfe der Inversdynamik des Roboterarms in Abhängigkeit des Verlaufs der Motorposition der Motorgeschwindigkeit und der Motorbeschleunigung ermittelt. Die Motorgeschwindigkeit und die Motorbeschleunigung werden hierbei mittels numerischer Differentiation aus der gemessenen Motorposition ermittelt. Die Optimierung erfolgt mit Hilfe des Gradientenabstiegsverfahrens. In Abhängigkeit des geschätzten Momentenrippels wird mit Hilfe der Gelenksteifigkeit eine Adaption der Motorreferenztrajektorie vorgenommen. Der Grundgedanke hierbei ist, dass ein Gelenkmoment eine Verdrillung zwischen Motor und Abtrieb bewirkt. Die Verdrillung multipliziert mit der Gelenksteifigkeit ergibt das übertragene Gelenkmoment. Das geschätzte Rippelmoment lässt sich somit durch eine Gegenbewegung des Motors reduzieren.

Bei konstanter Drehzahl wird der Motor bei vorhandenem Momentenrippel eine schwingungsbehaftete Bewegung durchführen, die dazu führt, dass das resultierende Gelenkmomentenrippel deutlich reduziert wird. Die Übersetzungsungenauigkeit wird also durch eine angepasste Motorbewegung kompensiert.

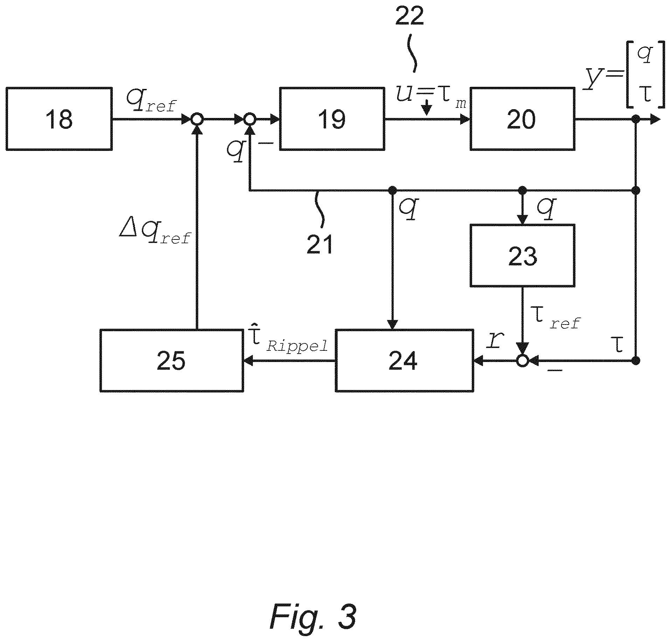

Durch eine hohe Bandbreite der Positionsregelung ist gewährleistet, dass bei niedrigen Drehzahlen der Motor in der Lage ist, der korrigierten Sollbahn zu folgen. Der resultierende Positionsregelkreis eines Gelenks mit integrierter Online-Adaption der Referenztrajektorie ist in Fig. 3 dargestellt.

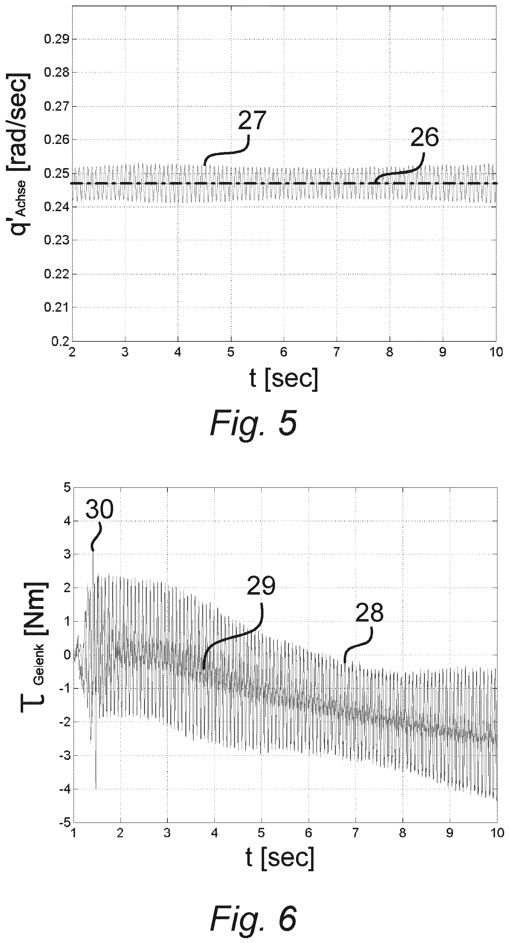

In Fig. 5 ist die sich ergebende Solldrehzahl dargestellt für den Fall einer Bewegung mit gewünscht konstanter Drehzahl. Durch die Online-Adaption wird dem Motor eine schwingungsbehaftete Bewegung vorgegeben, die dazu führt, dass die Gelenkmomentenrippel nach einer kurzen Lernphase deutlich reduziert werden, was in Fig. 6 dargestellt ist. Die deutlich reduzierten Gelenkmomentenrippel führen entsprechend zu einer deutlich höheren Laufruhe des Gelenks.

In einer besonderen Weiterbildung des Verfahrens kann die periodische Funktion der Momentenrippel durch eine Fourierreihenentwicklung, insbesondere mittels eines harmonisch aktivierten Künstlichen Neuronalen Netzes approximiert werden.

Die Fourierreihenentwicklung kann dabei im Rahmen von 2Πperiodischen Funktionen dargestellt werden. In einer solchen Darstellung in Sinus-Kosinus-Form kommt erfindungsgemäß bei der Bestimmung von Momentenrippel der zweiten Harmonischen, also der ersten Oberschwingung zur Grundschwingung der Drehzahl des Motors die größte Bedeutung zu.

In einer speziellen Ausführungsform des Verfahrens kann als Optimierungsverfahren zum Anpassen der Amplitude und der Phase der periodischen Funktion ein Gradientenverfahren, insbesondere das Gradientenabstiegsverfahren verwendet werden. Das Gradientenabstiegsverfahren konvergiert zwar im Allgemeinen nicht gegen ein globales Minimum. Vorteil ist jedoch, dass das Gradientenabstiegsverfahren sicher gegen einen stationären Punkt konvergiert. Insoweit kann die Regelung der Kompensation der Momentenrippel mit hoher Stabilität durchgeführt werden.

Generell können in allen Ausführungsvarianten des Verfahrens die Motorgeschwindigkeiten und/oder die Motorbeschleunigungen durch numerische Differentiation der erfassten Motorpositionen berechnet werden. Aus jeweils zwei oder mehr zu verschiedenen Zeitpunkten erfassten Drehwinkellagen der Motorwelle des Motors kann mittels der Differenzenquotienten auch die Drehgeschwindigkeit und/oder die Drehbeschleunigung der Motorwelle des Motors abgeleitet und insofern bestimmt werden.

Die Gelenk-Torsionssteifigkeit des wenigstens einen Gelenks kann in einer Variation des Verfahrens aus einem dem Antriebsstrang zwischen dem Motor und dem Gelenk zugeordneten Schubmodul und aus einem dem Antriebsstrang zwischen dem Motor und dem Gelenk zugeordneten Torsionsträgheitsmoments bestimmt werden. Das Schubmodul ist werkstoffabhängig und das zugeordnete Torsionsträgheitsmoment ist geometrieabhängig. Die Gelenk-Torsionssteifigkeit ergibt sich somit sowohl aus dem Werkstoff, als auch aus der Geometrie des Gelenks bzw. dessen drehmomentübertragenden Komponenten.

Das Getriebe kann als ein Spannungswellengetriebe ausgebildet sein, welches eine Motorwelle des Motors des wenigstens einen Gelenks mit dem zugeordneten Gelenk des Roboterarms zur Übertragung eines Antriebsmoments verbindet. Ein Spannungswellengetriebe wird auch als Harmonic-Drive-Getriebe bezeichnet. Es umfasst im Grundaufbau einen starren Außenring mit einer Innenverzahnung, eine verformbare Zylinderbüchse, die eine mit der Innenverzahnung des Außenrings kämmende Außenverzahnung aufweist, und eine elliptische Scheibe, welche bei seiner Drehung die Zylinderbüchse verformt, so dass die Außenverzahnung der Zylinderbüchse, welche weniger Zähne aufweist, als die Innenverzahnung des Außenrings, an der Innenverzahnung des Außenrings abwälzt. Die verformbare Zylinderbüchse wird auch als "Flex-Spline" bezeichnet. Die elliptische Scheibe wird auch als "Wave-Generator" bezeichnet. Der starre Außenring wird auch als "Circular-Spline" bezeichnet.

In allen Ausführungsvarianten des Verfahrens können die Amplitude und die Phase der periodischen Funktion gegebenenfalls mittels eines Optimierungsverfahrens im laufenden Betrieb des elektrischen Motors, welcher dem wenigstens einen Gelenk zugeordnet ist, nach einer Änderung der Drehgeschwindigkeit des elektrischen Motors angepasst bzw. erneut angepasst werden.

Das erfindungsgemäße Verfahren und/oder die erfindungsgemäßen Weiterbildungen des Verfahrens können demgemäß während des Betriebs des Roboters zu verschiedenen Zeiten immer wieder erneut durchgeführt werden, um die Momentenrippel erneut zu schätzen. Die verschiedenen Zeitpunkte zur erneuten Durchführung des Verfahrens können dabei steuerungstechnisch vorgegeben werden oder manuell angestoßen werden. So kann bei der Kompensation von Momentenrippeln auf gegebenenfalls eintretende Änderungen im Antriebsstrang, beispielsweise aufgrund von Verschleiß im Getriebe, reagiert werden.

Die modellbasierten Gelenkmomente können mittels eines dynamischen Modells des Roboterarms berechnet werden, in dem keine Momentenrippel modelliert sind. Insofern ermöglicht das erfindungsgemäße Verfahren eine Kompensation von Momentenrippeln, obwohl diese hinsichtlich ihrer Quantität und Qualität vorab nicht bekannt sind.

Die erfindungsgemäße Aufgabe wird außerdem gelöst durch einen Roboter, aufweisend einen Roboterarm mit mehreren Gelenken und mehreren Gliedern, die durch die Bewegungen der Gelenke des Roboterarms gegeneinander verstellbar sind, wobei wenigstens ein Gelenk ein Getriebe umfasst, welches ausgebildet ist, das wenigstens eine Gelenk zu verstellen und zwar durch automatisches Ansteuern eines an das Getriebe angeschlossenen elektrischen Motors des Roboterarms, und aufweisend eine Steuervorrichtung, die ausgebildet ist zum automatischen Ansteuern der elektrischen Motoren des Roboterarms, um die Glieder des Roboterarms durch Bewegen der Gelenke automatisch gegeneinander zu verstellen, wobei die Steuervorrichtung ausbildet und einrichtet ist, ein Verfahren nach einem oder nach mehreren der beschriebenen Ausführungsformen durchzuführen.

Im Anwendungsfall eines Roboterarms kann dieser beispielsweise mehrere Gelenke und mehrere Glieder aufweisen, die durch die Bewegungen der Gelenke des Roboterarms gegeneinander verstellbar sind. Dabei kann jedem Gelenk ein eigener elektrischer Motor zugeordnet sein. Jeder dieser mehreren elektrischen Motoren ist ausgebildet, das jeweils ihm zugeordnete Gelenk des Roboterarms zu verstellen und zwar durch automatisches Ansteuern des elektrischen Motors. Der Roboterarm kann dazu eine Steuervorrichtung aufweisen, die ausgebildet ist zum automatischen Ansteuern der elektrischen Motoren des Roboterarms, um die Glieder des Roboterarms durch angetriebenes Bewegen der Gelenke automatisch gegeneinander zu verstellen.

Die erfindungsgemäße Aufgabe wird auch gelöst durch ein Computerprogrammprodukt aufweisend einen maschinenlesbaren Träger, auf dem Programmcode gespeichert ist, der von einer Steuervorrichtung des erfindungsgemäßen Roboters auslesbar ist und der die Steuervorrichtung ausbildet und/oder einrichtet, ein Verfahren nach einem oder nach mehreren der beschriebenen Ausführungsformen durchzuführen, wenn der Programmcode von der Steuervorrichtung ausgeführt wird.

Das Computerprogrammprodukt kann beispielsweise eine CD, eine DVD oder ein USB-Stick sein. Das Computerprogrammprodukt kann aber auch eine Steuerungskarte sein, auf der Mikroprozessoren eingebunden sind. Das Computerprogrammprodukt kann jedoch auch in Form eines Downloads realisiert sein, der über das Internet oder ein anderes Netzwerk angeboten und verkauft werden kann.

Der maschinenlesbare Träger kann somit eine CD, eine DVD oder ein Mikroprozessor sein, auf dem der Programmcode gespeichert ist. Der maschinenlesbare Träger kann aber auch eine Festplatte oder ein SSD-Laufwerk sein, auf das der Programmcode heruntergeladen wurde, beispielsweise mittels eines Downloads, insbesondere in Form von Datenpaketen.

Der Programmcode kann durch ein editiertes Programm und/oder durch Daten repräsentiert sein, die auf dem maschinenlesbaren Träger gespeichert sind.

Durch ein Auslesen des editierten Programms und/oder der Daten wird die auslesende Steuervorrichtung ausbildet und/oder einrichtet, das erfindungsgemäße Verfahren ausführen zu können.

Das erfindungsgemäße Verfahren wird durchgeführt, wenn die Steuervorrichtung den Programmcode d.h. das editierte Programm tatsächlich entsprechend ausführt und/oder die Daten tatsächlich entsprechend verarbeitet.

Konkrete Ausführungsbeispiele der Erfindung sind in der nachfolgenden Beschreibung unter Bezugnahme auf die beigefügten Figuren näher erläutert. Konkrete Merkmale dieser exemplarischen Ausführungsbeispiele können unabhängig davon, in welchem konkreten Zusammenhang sie erwähnt sind, gegebenenfalls auch einzeln oder in weiteren Kombinationen betrachtet, allgemeine Merkmale der Erfindung darstellen.

Es zeigen:
- Fig. 1: ein Ablaufschema des grundlegenden erfindungsgemäßen Verfahrens,
- Fig. 2: eine Seitenansicht eines beispielhaften Roboters, der einen Roboterarm mit Gliedern, Gelenken und Servomotoren umfasst, und der eine Steuervorrichtung aufweist, die ausgebildet ist, ein erfindungsgemäßes Verfahren durchzuführen,
- Fig. 3: eine Regelkreisstruktur der Kommandierung einer Referenztrajektorie an die Gelenke eines Roboterarms, um die Referenztrajektorie mit einem Bezugspunkt des Roboterarms abzufahren, mit einer Online-Adaption gemäß dem erfindungsgemäßen Verfahren,
- Fig. 4: eine schematische Darstellung einer Grundstruktur eines harmonisch aktivierten Künstlichen Neuronalen Netzes,
- Fig. 5: ein Diagramm der Sollgeschwindigkeiten eines Gelenkes des Roboterarms über die Zeit, sowohl ohne Anpassung der Referenztrajektorie, als auch mit einer erfindungsgemäßen Anpassung der Referenztrajektorie, und
- Fig. 6: ein Diagramm der Gelenkmomente eines Gelenkes des Roboterarms über die Zeit, sowohl ohne Anpassung der Referenztrajektorie, als auch mit einer erfindungsgemäßen Anpassung der Referenztrajektorie.

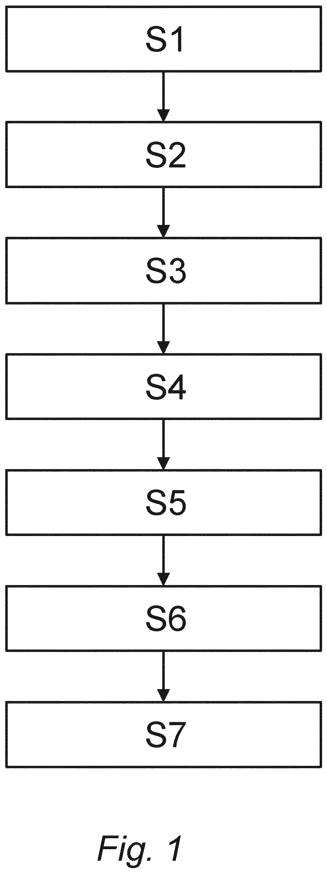

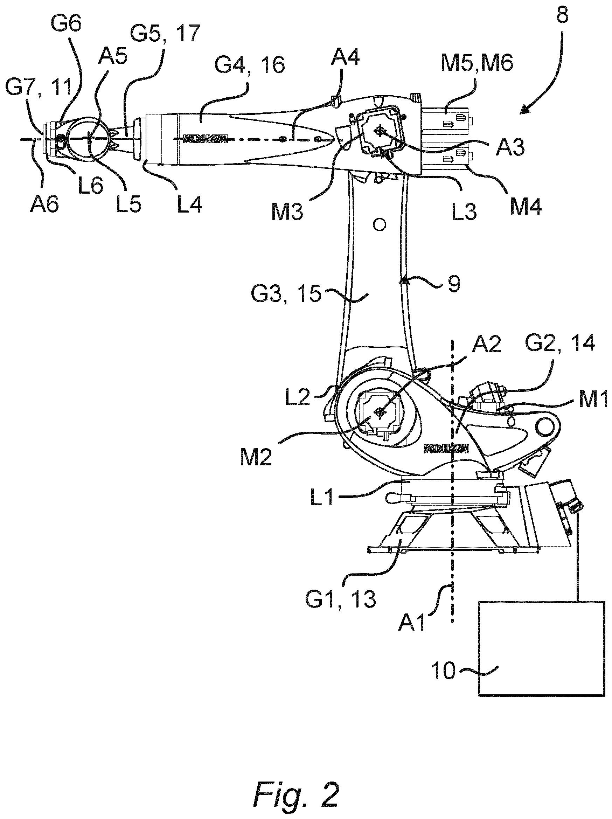

In Fig. 1 ist schematisch der Ablauf des grundlegenden erfindungsgemäßen Verfahrens zum automatischen Ansteuern der Bewegung wenigstens eines Gelenks L1-L6 eines Roboterarms 9 dargestellt. Dabei weist, wie in Fig. 2 dargestellt ist, der Roboterarm 9 mehrere Glieder G1-G7 auf, die durch die Bewegungen der Gelenke L1-L6 des Roboterarms 9 gegeneinander verstellbar sind, wobei das wenigstens eine Gelenk L1-L6 ein Getriebe umfasst, welches ausgebildet ist, das wenigstens eine Gelenk L1-L6 zu verstellen und zwar durch automatisches Ansteuern eines an das Getriebe angeschlossenen elektrischen Motors M1-M6 des Roboterarms 9.

Das erfindungsgemäße Verfahren, wie in Fig.1 dargestellt, weist die folgenden Schritte auf:
Im ersten Schritt S1 erfolgt ein Erfassen der Motorpositionen q, der Motorgeschwindigkeiten q' und/oder der Motorbeschleunigungen q" des elektrischen Motors M1-M6 zu bestimmten Zeitpunkten t im zeitlichen Verlauf.

Im zweiten Schritt S2 erfolgt ein Messen des jeweiligen Gelenkmoments τ zu den bestimmten Zeitpunkten t im zeitlichen Verlauf.

Im dritten Schritt S3 erfolgt ein Berechnen der jeweiligen modellbasierten Gelenkmomente τ_{ref} zu den bestimmten Zeitpunkten t im zeitlichen Verlauf mittels der inversen Dynamik eines dynamischen Modells des Roboterarms 9 aus den erfassten Motorpositionen q, Motorgeschwindigkeiten q' und/oder Motorbeschleunigungen q" des elektrischen Motors M1-M6.

Im vierten Schritt S4 erfolgt ein Bestimmen von geschätzten Momentenrippeln τ_{Rippel} in Form einer periodischen Funktion mit der Amplitude A und der Phase ϕ in Abhängigkeit der Motorpositionen q, wobei gemäß dem fünften Schritt S5 die Amplitude A und die Phase ϕ der periodischen Funktion mittels eines Optimierungsverfahrens angepasst werden, indem gemäß dem sechsten Schritt S6 als ein Residuum r für die Optimierung die Abweichungen zwischen den jeweils gemessenen Gelenkmomenten τ und der jeweils berechneten modellbasierten Gelenkmomente τ_{ref} verwendet wird.

Abschließend erfolgt in einem siebten Schritt S7 ein Anpassen der zu kommandierenden Sollwerte qₛₒₗₗ, q'ₛₒₗₗ, q"ₛₒₗₗ für die Motorpositionen q, der Motorgeschwindigkeiten q' und/oder der Motorbeschleunigungen q" indem aus den geschätzten Momentenrippeln τ_{Rippel} und einer Gelenk-Torsionssteifigkeit k des wenigstens einen Gelenks die aufgrund der Momentenrippel τ_{Rippel} auftretenden Motorpositionsabweichungen q_{ref} bestimmt und zur Anpassung der zu kommandierenden Sollwerte qₛₒₗₗ, q'ₛₒₗₗ, q"ₛₒₗₗ herangezogen werden.

Die Fig. 2 zeigt einen Roboter 8, der einen Roboterarm 9 und eine Steuervorrichtung 10 aufweist. Der Roboterarm 9 umfasst im Falle des vorliegenden Ausführungsbeispiels mehrere, nacheinander angeordnete, und mittels Gelenke L1 bis L6 drehbar miteinander verbundene Glieder G1 bis G7.

Demgemäß weist der Roboter 8 einen Roboterarm 9 mit mehreren Gelenken L1-L6 und mehreren Gliedern G1-G7 auf, die durch die Bewegungen der Gelenke L1-L6 des Roboterarms gegeneinander verstellbar sind, wobei wenigstens ein Gelenk L1-L6 ein Getriebe umfasst, welches ausgebildet ist, das wenigstens eine Gelenk L1-L6 zu verstellen und zwar durch automatisches Ansteuern eines an das Getriebe angeschlossenen elektrischen Motors M1-M6 des Roboterarms 9, und aufweisend eine Steuervorrichtung 10, die ausgebildet ist zum automatischen Ansteuern der elektrischen Motoren M1-M6 des Roboterarms 9, um die Glieder G1-G7des Roboterarms 9 durch Bewegen der Gelenke L1-L6 automatisch gegeneinander zu verstellen, wobei die Steuervorrichtung 10 ausbildet und einrichtet ist, das erfindungsgemäße Verfahren durchzuführen.

Der Roboter 8 weist somit die Steuervorrichtung 10 auf, die ausgebildet ist, ein Roboterprogramm auszuführen und die Glieder G1-G7 und Gelenke L1-L6 des Roboterarms 9 automatisch zu bewegen. Eines der mehreren Glieder G1-G7 bildet ein Endglied (G7) des Roboterarms 9, das einen Werkzeugflansch 11 aufweist.

Die Steuervorrichtung 10 des Roboters 8 ist ausgebildet bzw. eingerichtet, ein Roboterprogramm auszuführen, durch welches die Gelenke L1 bis L6 des Roboterarms 9 gemäß des Roboterprogramms automatisiert oder in einem Handfahrbetrieb automatisch verstellt bzw. drehbewegt werden können. Dazu ist die Steuervorrichtung 10 mit ansteuerbaren elektrischen Antrieben, den Motoren M1 bis M6 verbunden, die ausgebildet sind, die jeweiligen Gelenke L1 bis L6 des Roboterarms 9 zu verstellen.

Im Falle des vorliegenden Ausführungsbeispiels umfassen die Glieder G1 bis G7 ein Robotergrundgestell 13 und ein Karussell 14. Das Karussell 14 ist relativ zum Robotergrundgestell 13 um eine vertikal verlaufende Achse A1 drehbar gelagert. Weitere Glieder des Roboterarms 9 sind eine Schwinge 15, ein Armausleger 16 und eine vorzugsweise mehrachsige Roboterhand 17 mit einer als Werkzeugflansch 11 ausgeführten Befestigungsvorrichtung zum Befestigen eines Werkzeugs. Die Schwinge 15 ist am unteren Ende, d.h. an dem Gelenk L2 der Schwinge 15 auf dem Karussell 14 um die Drehachse A2 schwenkbar gelagert.

Am oberen Ende der Schwinge 15 ist an dem ersten Gelenk L3 der Schwinge 15 wiederum um eine ebenfalls vorzugsweise horizontale Achse A3 der Armausleger 16 schwenkbar gelagert. Dieser trägt endseitig die Roboterhand 17 mit ihren vorzugsweise drei Drehachsen A4, A5, A6. Die Gelenke L1 bis L6 sind durch jeweils einen der elektrischen Motoren M1 bis M6 über die Steuervorrichtung 10 programmgesteuert antreibbar. Den elektrischen Motoren M1 bis M6 können dazu beispielsweise die Motoren M1 bis M6 ansteuernde Frequenzumrichter zugeordnet sein.

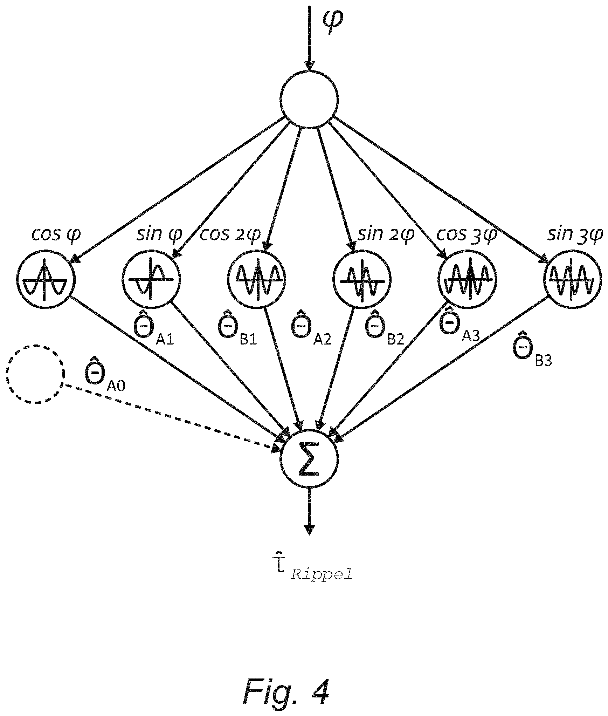

In der Fig. 3 ist eine Regelkreisstruktur der Kommandierung einer Referenztrajektorie an die Gelenke L1-L6 des Roboterarms 9 gezeigt. Die Regelkreisstruktur repräsentiert ein Verfahren, um die Referenztrajektorie mit einem Bezugspunkt des Roboterarms 9 abzufahren, die eine erfindungsgemäße Online-Adaption umfasst. Die Momentenrippel τ_{Rippel} werden erfindungsgemäß als periodische Funktion in Abhängigkeit der Motorposition q modelliert. Die Amplitude A und die Phase ϕ werden mittels Optimierung im laufenden Betrieb ermittelt. Dieses Vorgehen kann im Rahmen einer Approximation periodischer Funktionen mit Hilfe eines harmonisch aktivierten Künstlichen Neuronalen Netzes erfolgen, wie dies in Fig. 4 veranschaulicht ist.

Als Residuum r für die Optimierung wird die Abweichung zwischen modellbasiert berechnetem Gelenkmoment τ_{ref} und dem gemessenen Gelenkmoment τ verwendet. Das modellbasiert berechnete Gelenkmoment τ_{ref} wird hierbei mit Hilfe der Inversdynamik des Roboterarms in Abhängigkeit des Verlaufs der Motorposition q, der Motorgeschwindigkeit q' und der Motorbeschleunigung q" ermittelt. Die Motorgeschwindigkeit q' und die Motorbeschleunigung q" werden hierbei mittels numerischer Differentiation aus der gemessenen Motorposition ermittelt. Die Optimierung erfolgt mit Hilfe des Gradientenabstiegsverfahrens. In Abhängigkeit des geschätzten Momentenrippels τ_{Rippel} wird mit Hilfe der Gelenksteifigkeit k eine Adaption der Motorreferenztrajektorie q_{ref} um Δq_{ref} vorgenommen. Der Grundgedanke hierbei ist, dass ein Gelenkmoment eine Verdrillung zwischen Motor und Abtrieb bewirkt. Die Verdrillung multipliziert mit der Gelenksteifigkeit k ergibt das übertragene Gelenkmoment. Das geschätzte Rippelmoment τ_{Rippel} lässt sich somit durch eine Gegenbewegung des Motors M1-M6 reduzieren.

Beispielsweise bei einer gewünschten konstanten Drehzahl wird der Motor M1-M6 bei vorhandenem Momentenrippel τ_{Rippel} erfindungsgemäß eine schwingungsbehaftete Bewegung durchführen, die dazu führt, dass das resultierende Gelenkmomentenrippel deutlich reduziert ist. Die Übersetzungsungenauigkeit wird also durch eine angepasste Motorbewegung kompensiert.

In der in Fig.3 gezeigten Regelkreisstruktur bildet eine Bahnplanung 18 die Führungsgröße. Sie liefert unmittelbar oder mittelbar die Soll-Motorpositionen q und gegebenenfalls die Soll-Motorgeschwindigkeiten q' und/oder die Soll-Motorbeschleunigungen q" für den zu regelnden elektrischen Motor M1 bis M6. Ein Positionsregler 19 liefert die Stellgröße für die Regelstrecke. Die Regelstrecke 20 wird durch das jeweilige Gelenk L1-L6 des Roboterarms 9 bzw. durch die jeweiligen Gelenke L1 bis L6 des Roboterarms 9 gebildet. Über eine Messeinrichtung werden die Ist-Motorpositionen q und gegebenenfalls die Ist-Motorgeschwindigkeiten q' und/oder die Ist-Motorbeschleunigungen q" dem Positionsregler 19 über die Gegenkopplung 21 rückgeführt. Die Störgröße u= τₘ wird durch die zu kompensierenden Momentenrippel 22 gebildet, welche beispielsweise durch die Getriebe der jeweiligen Antriebsstränge verursacht zu den Gelenken L1 bis L6 des Roboterarms 9 geführt werden. Erfindungsgemäß werden in dem dynamischen Modell 23 über die Inverse des Roboterarms 9 aus den Ist-Motorpositionen q die modellbasierten Gelenkmomente τ_{ref} bestimmt. Die modellbasierten Gelenkmomente τ_{ref} werden dann zusammen mit den Ist-Momenten τ einem harmonisch aktivierten Künstlichen Neuronalen Netz 24 zugeführt bzw. das entsprechende Residuum r dem harmonisch aktivierten Künstlichen Neuronalen Netz 24 zugeführt. Die derart geschätzten Momentenrippeln τ_{Rippel} werden zur Berechnung der notwendigen Bahnkorrekturen einem Bahnkorrektursystem 25 zugeführt, welches eine Adaption der Motorreferenztrajektorie q_{ref} um Δq_{ref} vornimmt, wodurch der erfindungsgemäße Regelkreis geschlossen wird.

In Fig. 4 ist schematisch aufgezeigt, wie die periodische Funktion der Momentenrippel τ_{Rippel} durch eine Fourierreihenentwicklung, insbesondere mittels eines harmonisch aktivierten Künstlichen Neuronalen Netzes approximiert wird. Die Fourierreihenentwicklung kann dabei im Rahmen von 2Πperiodischen Funktionen dargestellt werden. In einer solchen Darstellung in Sinus-Kosinus-Form kommt erfindungsgemäß bei der Bestimmung von Momentenrippel der zweiten Harmonischen (cos2ϕ, sin2ϕ), also der ersten Oberschwingung zur Grundschwingung der Drehzahl des Motors M1-M6 die größte Bedeutung zu.

In Fig. 5 sind die Solldrehzahlen über einen Abschnitt des zeitlichen Verlaufs für die Fälle von Bewegungen mit gewünscht konstanter Drehzahl dargestellt. Die strich-punktiert dargestellte Linie 26 von konstant 0,248 rad/sec repräsentiert dabei eine nach dem Stand der Technik übliche Vorgabe einer festen, konstanten Solldrehzahl über die Zeit. Die in dünner durchgehender Ausführung dargestellte Linie 27 hingegen variiert in einem Bereich zwischen etwa 0,242 rad/sec und 0,252 rad/sec sinusartig und repräsentiert eine Vorgabe einer Solldrehzahl nach dem erfindungsgemäßen Verfahren mit dem Ziel der Erreichung von verbesserten Ist-Geschwindigkeiten, indem die konstruktiv bedingten Momentenrippel dadurch kompensiert werden, dass die Solldrehzahl nicht als ein konstanter Wert vorgegeben wird, sondern in Form einer sinusartigen Schwingung variierend vorgegeben wird.

Durch eine solche Online-Adaption der Soll-Geschwindigkeiten, wie durch die Linie 27 repräsentiert, wird dem Motor eine schwingungsbehaftete Soll-Bewegung vorgegeben, die dazu führt, dass die Gelenkmomentenrippel nach einer kurzen Lernphase deutlich reduziert werden können, was in Fig. 6 dargestellt ist. Die deutlich reduzierten Gelenkmomentenrippel führen entsprechend zu einer deutlich höheren Laufruhe des jeweiligen Gelenks L1-L6 des Roboterarms 9.

So zeigt die Fig. 6 mit der Linie 28, die eine Schwingung zeigt, welche mit einer Amplitude von etwa 2 Nm schwingt, eine am betreffenden Gelenk L1-L6 auftretende Ist-Momentschwingung, die bei einer Ansteuerung mit einer konstanten Soll-Geschwindigkeits-Vorgabe auftritt, wie es nach dem Stand der Technik bekannt ist.

Die Linie 29 hingegen zeigt eine deutlich geringere Schwingung der am betreffenden Gelenk L1-L6 auftretenden Ist-Momente, welche mit einer Amplitude von lediglich etwa 0,5 Nm einschwingt, die sich bei einer Ansteuerung mit einer Soll-Geschwindigkeits-Vorgabe nach dem erfindungsgemäßen Verfahren einstellt. Lediglich zu Beginn der Regelung nach dem erfindungsgemäßen Verfahren tritt ganz am Anfang der Regelung bei dem Linienabschnitt 30 der Linie 29 eine gewisse Anfangsverschlechterung ein, die jedoch rasch wieder abklingt und im weiteren Verlauf eine deutliche Verbesserung gegenüber dem Verhalten (Linie 28) ohne einer Regelung nach dem erfindungsgemäßen Verfahren darstellt.

## Patentansprüche

1. Verfahren zum automatischen Ansteuern der Bewegung wenigstens eines Gelenks (L1-L6) eines Roboterarms (9), wobei der Roboterarm (9) mehrere Glieder (G1-G7) aufweist, die durch die Bewegungen der Gelenke (L1-L6) des Roboterarms (9) gegeneinander verstellbar sind, und das wenigstens eine Gelenk (L1-L6) ein Getriebe umfasst, welches ausgebildet ist, das wenigstens eine Gelenk (L1-L6) zu verstellen und zwar durch automatisches Ansteuern eines an das Getriebe angeschlossenen elektrischen Motors (M1-M6) des Roboterarms (9), aufweisend die Schritte:
- Erfassen der Motorpositionen (q), der Motorgeschwindigkeiten (q') und/oder der Motorbeschleunigungen (q") des elektrischen Motors (M1-M6) zu bestimmten Zeitpunkten (t) im zeitlichen Verlauf,
- Messen des jeweiligen Gelenkmoments (τ) zu den bestimmten Zeitpunkten (t) im zeitlichen Verlauf,
- Berechnen der jeweiligen modellbasierten Gelenkmomente (τ_{ref}) zu den bestimmten Zeitpunkten (t) im zeitlichen Verlauf mittels der inversen Dynamik eines dynamischen Modells des Roboterarms (9) aus den erfassten Motorpositionen (q), Motorgeschwindigkeiten (q') und/oder Motorbeschleunigungen (q"),
- Bestimmen von geschätzten Momentenrippeln (T_{Rippel}) in Form einer periodischen Funktion mit der Amplitude (A) und der Phase (ϕ) in Abhängigkeit der Motorpositionen (q), wobei
- die Amplitude (A) und die Phase (ϕ) der periodischen Funktion mittels eines Optimierungsverfahrens angepasst werden, indem
- als ein Residuum (r) für die Optimierung die Abweichungen zwischen den jeweils gemessenen Gelenkmomenten (τ) und der jeweils berechneten modellbasierten Gelenkmomente (τ_{ref}) verwendet wird, und
- Anpassen der zu kommandierenden Sollwerte (qₛₒₗₗ, q'ₛₒₗₗ, q"ₛₒₗₗ) für die Motorpositionen (q), der Motorgeschwindigkeiten (q') und/oder der Motorbeschleunigungen (q"), indem aus den geschätzten Momentenrippeln (τ_{Rippel}) und einer Gelenk-Torsionssteifigkeit (k) des wenigstens einen Gelenks die aufgrund der Momentenrippel (τ_{Rippel}) auftretenden Motorpositionsabweichungen (q_{ref}) bestimmt und zur Anpassung der zu kommandierenden Sollwerte (qₛₒₗₗ, q'ₛₒₗₗ, q"ₛₒₗₗ) herangezogen werden.

2. Verfahren nach Anspruch 1, **dadurch gekennzeichnet, dass** die periodische Funktion der Momentenrippel (τ_{Rippel}) durch eine Fourierreihenentwicklung, insbesondere mittels eines harmonisch aktivierten Künstlichen Neuronalen Netzes approximiert wird.

3. Verfahren nach Anspruch 1 oder 2, **dadurch gekennzeichnet, dass** als Optimierungsverfahren zum Anpassen der Amplitude (A) und der Phase (ϕ) der periodischen Funktion ein Gradientenabstiegsverfahren verwendet wird.

4. Verfahren nach einem der Ansprüche 1 bis 3, **dadurch gekennzeichnet, dass** die Motorgeschwindigkeiten (q') und/oder die Motorbeschleunigungen (q") durch numerische Differentiation der erfassten Motorpositionen (q) berechnet werden.

5. Verfahren nach einem der Ansprüche 1 bis 4, **dadurch gekennzeichnet, dass** die Gelenk-Torsionssteifigkeit (k) des wenigstens einen Gelenks (L1-L6) aus einem dem Antriebsstrang zwischen dem Motor (M1-M6) und dem Gelenk (L1-L6) zugeordneten Schubmodul (G) und aus einem dem Antriebsstrang zwischen dem Motor (M1-M6) und dem Gelenk (L1-L6) zugeordneten Torsionsträgheitsmoments (J_{T}) bestimmt wird.

6. Verfahren nach einem der Ansprüche 1 bis 5, **dadurch gekennzeichnet, dass** das Getriebe als ein Spannungswellengetriebe ausgebildet ist, welches eine Motorwelle des Motors (M1-M6) des wenigstens einen Gelenks (L1-L6) mit dem zugeordneten Gelenk (L1-L6) des Roboterarms (9) zur Übertragung eines Antriebsmoments verbindet.

7. Verfahren nach einem der Ansprüche 1 bis 6, **dadurch gekennzeichnet, dass** die Amplitude (A) und die Phase (ϕ) der periodischen Funktion mittels eines Optimierungsverfahrens im laufenden Betrieb des elektrischen Motors (M1-M6), welcher dem wenigstens einen Gelenk (L1-L6) zugeordnet ist, nach einer Änderung der Drehgeschwindigkeit des elektrischen Motors (M1-M6) angepasst werden.

8. Verfahren nach einem der Ansprüche 1 bis 7, **dadurch gekennzeichnet, dass** die modellbasierten Gelenkmomente (τ_{ref}) mittels eines dynamischen Modells des Roboterarms (9) berechnet werden, in dem keine Momentenrippel (τ_{Rip-pel}) modelliert sind.

9. Roboter, aufweisend einen Roboterarm (9) mit mehreren Gelenken (L1-L6) und mehreren Gliedern (G1-G7), die durch die Bewegungen der Gelenke (L1-L6)des Roboterarms (9) gegeneinander verstellbar sind, wobei wenigstens ein Gelenk (L1-L6) ein Getriebe umfasst, welches ausgebildet ist, das wenigstens eine Gelenk (L1-L6) zu verstellen und zwar durch automatisches Ansteuern eines an das Getriebe angeschlossenen elektrischen Motors (M1-M6) des Roboterarms (9), und aufweisend eine Steuervorrichtung (10), die ausgebildet ist zum automatischen Ansteuern der elektrischen Motoren (M1-M6)des Roboterarms (9), um die Glieder (G1-G7) des Roboterarms (9) durch Bewegen der Gelenke (L1-L6) automatisch gegeneinander zu verstellen, wobei die Steuervorrichtung (10) ausbildet und einrichtet ist, ein Verfahren nach einem der Ansprüche 1 bis 8 durchzuführen.

10. Computerprogrammprodukt aufweisend einen maschinenlesbaren Träger, auf dem Programmcode gespeichert ist, der von einer Steuervorrichtung (10) des Roboters (9) gemäß Anspruch 9 auslesbar ist und der die Steuervorrichtung (10) ausbildet und/oder einrichtet, ein Verfahren nach einem der Ansprüche 1 bis 8 durchzuführen, wenn der Programmcode von der Steuervorrichtung (10) ausgeführt wird.

## Claims

1. Method for automatically controlling the movement of at least one joint (L1-L6) of a robotic arm (9), wherein the robotic arm (9) has multiple members (G1-G7), which can be adjusted relative to one another by the movements of the joints (L1-L6) of the robotic arm (9), and the at least one joint (L1-L6) comprises a transmission which is designed to adjust the at least one joint (L1-L6), specifically by automatically controlling an electric motor (M1-M6) of the robotic arm (9) connected to the transmission, comprising the steps of:
- detecting the motor positions (q), the motor speeds (q') and/or the motor accelerations (q") of the electric motor (M1-M6) at specific points in time (t) over the course of time,
- measuring the respective joint moment (τ) at the specific points in time (t) over the course of time,
- calculating the respective model-based joint moments (τ_{ref}) at the specific points in time (t) over the course of time by means of the inverse dynamics of a dynamic model of the robotic arm (9) from the detected motor positions (q), motor speeds (q') and/or motor accelerations (q"),
- determining estimated moment ripples (τᵣᵢₚₚₗₑ) in the form of a periodic function with the amplitude (A) and the phase (ϕ) in dependence on the motor positions (q), wherein
- the amplitude (A) and the phase (ϕ) of the periodic function are adapted by means of an optimizing procedure, in that
- the deviation between the respectively measured joint moments (τ) and the respectively calculated model-based joint moments (τ_{ref}) is used as a remainder (r) for the optimization, and
- adapting the setpoint values (qₛₑₜ, q'ₛₑₜ, q"ₛₑₜ) to be commanded for the motor positions (q), the motor speeds (q') and/or the motor accelerations (q"), in that the motor position deviations (q_{ref}) occurring on account of the moment ripple (τᵣᵢₚₚₗₑ) are determined from the estimated moment ripples (τᵣᵢₚₚₗₑ) and a joint torsional stiffness (k) of the at least one joint and are used for the adaptation of the setpoint values (qₛₑₜ, q'ₛₑₜ, q"ₛₑₜ) to be commanded.

2. Method according to Claim 1, **characterized in that** the periodic function of the moment ripple (τᵣᵢₚₚₗₑ) is approximated by a Fourier series expansion, in particular by means of a harmoniously activated artificial neural network.

3. Method according to Claim 1 or 2, **characterized in that** a gradient descent method is used as the optimizing procedure for adapting the amplitude (A) and the phase (ϕ) of the periodic function.

4. Method according to one of Claims 1 to 3, **characterized in that** the motor speeds (q') and/or the motor accelerations (q") are calculated by numerical differentiation of the recorded motor positions (q).

5. Method according to one of Claims 1 to 4, **characterized in that** the joint torsional stiffness (k) of the at least one joint (L1-L6) is determined from a shear modulus (G) assigned to the drive train between the motor (M1-M6) and the joint (L1-L6) and from a torsional moment of inertia (J_{T}) assigned to the drive train between the motor (M1-M6) and the joint (L1-L6).

6. Method according to one of Claims 1 to 5, **characterized in that** the transmission is designed as a harmonic drive transmission, which connects the motor shaft of the motor (M1-M6) of the at least one joint (L1-L6) to the assigned joint (L1-L6) of the robotic arm (9) for the transmission of a drive moment.

7. Method according to one of Claims 1 to 6, **characterized in that** the amplitude (A) and the phase (ϕ) of the periodic function are adapted by means of an optimizing procedure during operation of the electric motor (M1-M6) assigned to the at least one joint (L1-L6) in accordance with a change in the rotational speed of the electric motor (M1-M6).

8. Method according to one of Claims 1 to 7, **characterized in that** the model-based joint moments (τ_{ref}) are calculated by means of a dynamic model of the robotic arm (9) in which no moment ripples (τᵣᵢₚₚₗₑ) are modelled.

9. Robot, comprising a robotic arm (9) with multiple joints (L1-L6) and with multiple members (G1-G7), which can be adjusted relative to one another by the movements of the joints (L1-L6) of the robotic arm (9), wherein at least one joint (L1-L6) comprises a transmission which is designed to adjust the at least one joint (L1-L6), specifically by automatically controlling an electric motor (M1-M6) of the robotic arm (9) connected to the transmission, and comprising a control device (10), which is designed for automatically controlling the electric motors (M1-M6) of the robotic arm (9) in order to adjust the members (G1-G7) of the robotic arm (9) by moving the joints (L1-L6) automatically with respect to one another, wherein the control device (10) is designed and set up to carry out a method according to one of Claims 1 to 8.

10. Computer program product comprising a machine-readable carrier, stored on which is program code which can be read out by a control device (10) of the robot (9) according to Claim 9 and which designs and/or sets up the control device (10) to carry out a method according to one of Claims 1 to 8 when the program code is performed by the control device (10).

## Revendications

1. Procédé permettant de piloter automatiquement le mouvement d'au moins une articulation (L1-L6) d'un bras robotisé (9), le bras robotisé (9) présentant plusieurs membres (G1-G7) qui peuvent être déplacés les uns par rapport aux autres par les mouvements des articulations (L1-L6) du bras robotisé (9), et ladite au moins une articulation (L1-L6) comprenant une transmission qui est réalisée pour déplacer ladite au moins une articulation (L1-L6), notamment par le pilotage automatique d'un moteur électrique (M1-M6) qui est connecté à la transmission du bras robotisé (9), présentant les étapes consistant à :
- détecter les positions de moteur (q), les vitesses de moteur (q') et/ou les accélérations de moteur (q") du moteur électrique (M1-M6) à des instants déterminés (t) dans le temps,
- mesurer le couple d'articulation (τ) respectif aux instants déterminés (t) dans le temps,
- calculer les couples d'articulation basés sur modèle (τ_{ref}) respectifs aux instants déterminés (t) dans le temps au moyen de la dynamique inverse d'un modèle dynamique du bras robotisé (9) à partir des positions de moteur (q), des vitesses de moteur (q') et/ou des accélérations de moteur (q") détectées,
- déterminer des ondulations de couple estimées (τ_{Rippel}) sous la forme d'une fonction périodique ayant l'amplitude (A) et la phase (ϕ) en fonction des positions de moteur (q), dans lequel
- l'amplitude (A) et la phase (ϕ) de la fonction périodique sont adaptées au moyen d'un procédé d'optimisation, en ce que
- les écarts entre les couples d'articulation (τ) respectivement mesurés et les couples d'articulation basés sur modèle (τ_{ref}) respectivement calculés sont utilisés comme résidu (r) pour l'optimisation, et
- adapter les valeurs de consigne à commander (qₛₒₗₗ, q'ₛₒₗₗ, q"ₛₒₗₗ) pour les positions de moteur (q), les vitesses de moteur (q') et/ou les accélérations de moteur (q") en ce qu'à partir des ondulations de couple estimées (τ_{Rippel}) et d'une rigidité en torsion de l'articulation (k) de ladite au moins une articulation, les écarts de position de moteur (q_{ref}) survenant en raison des ondulations de couple (τ_{Rippel}) sont déterminés et utilisés pour adapter les valeurs de consigne à commander (qₛₒₗₗ, q'ₛₒₗₗ, q"ₛₒₗₗ).

2. Procédé selon la revendication 1, **caractérisé en ce que** la fonction périodique des ondulations de couple (τ_{Rippel}) est approchée par un développement en série de Fourier, en particulier au moyen d'un réseau neuronal artificiel à activation harmonique.

3. Procédé selon la revendication 1 ou 2, **caractérisé en ce qu'**un procédé de descente de gradient est utilisé comme procédé d'optimisation pour adapter l'amplitude (A) et la Phase (ϕ) de la fonction périodique.

4. Procédé selon l'une quelconque des revendications 1 à 3, **caractérisé en ce que** les vitesses de moteur (q') et/ou les accélérations de moteur (q") sont calculées par différentiation numérique des positions de moteur (q) détectées.

5. Procédé selon l'une quelconque des revendications 1 à 4, **caractérisé en ce que** la rigidité en torsion de l'articulation (k) de ladite au moins une articulation (L1-L6) est déterminée à partir d'un module de glissement (G) associé à la chaîne cinématique entre le moteur (M1-M6) et l'articulation (L1-L6) et à partir d'un moment d'inertie de torsion (J_{T}) associé à la chaîne cinématique entre le moteur (M1-M6) et l'articulation (L1-L6).

6. Procédé selon l'une quelconque des revendications 1 à 5, **caractérisé en ce que** la transmission est réalisée sous la forme d'une transmission harmonique qui relie un arbre moteur du moteur (M1-M6) de ladite au moins une articulation (L1-L6) à l'articulation (L1-L6) associée du bras robotisé (9) pour transmettre un couple d'entraînement.

7. Procédé selon l'une quelconque des revendications 1 à 6, **caractérisé en ce que** l'amplitude (A) et la phase (ϕ) de la fonction périodique sont adaptées au moyen d'un procédé d'optimisation en cours de fonctionnement du moteur électrique (M1-M6) qui est associé à ladite au moins une articulation (L1-L6) après une modification de la vitesse de rotation du moteur électrique (M1-M6).

8. Procédé selon l'une quelconque des revendications 1 à 7, **caractérisé en ce que** les couples d'articulation basés sur modèle (τ_{ref}), sont calculés au moyen d'un modèle dynamique du bras robotisé (9) dans lequel aucune ondulation de couple (τ_{Rippel}) n'est modélisée.

9. Robot, présentant un bras robotisé (9) pourvu de plusieurs articulations (L1-L6) et de plusieurs membres (G1-G7) qui peuvent être déplacés les uns par rapport aux autres par les mouvements des articulations (L1-L6) du bras robotisé (9), au moins une articulation (L1-L6) comprenant une transmission qui est réalisée pour déplacer ladite au moins une articulation (L1-L6), notamment par un pilotage automatique d'un moteur électrique (M1-M6) connecté à la transmission du bras robotisé (9), et présentant un dispositif de commande (10) qui est réalisé pour piloter automatiquement les moteurs électriques (M1-M6) du bras robotisé (9) afin de déplacer automatiquement les membres (G1-G7) du bras robotisé (9) les uns par rapport aux autres par le mouvement des articulations (L1-L6), le dispositif de commande (10) étant réalisé et configuré pour exécuter un procédé selon l'une quelconque des revendications 1 à 8.

10. Produit de programme informatique, présentant un support lisible par machine sur lequel est stocké du code programme qui peut être lu par un dispositif de commande (10) du robot (9) selon la revendication 9 et qui réalise et/ou configure le dispositif de commande (10) pour exécuter un procédé selon l'une quelconque des revendications 1 à 8 lorsque le code programme est exécuté par le dispositif de commande (10).
